# EUROPEAN PATENT SPECIFICATION

(11) **EP 3 291 690 B1**
(45) Date of publication and mention of the grant of the patent: **23.06.2021**
(21) Application number: 16721853.6
(22) Date of filing: 04.05.2016
(51) Int. Cl.: A23K 10/22, A23K 10/26, A23K 10/30, A23K 10/37, A23K 20/158, A23L 29/262, A23L 33/21, A23K 10/35, A23K 20/163, A23K 50/80, A23K 20/147, A23K 50/40

(54) **FEED COMPOSITION**
FUTTERZUSAMMENSETZUNG
COMPOSITION D'ALIMENT

(30) Priority: 06.05.2015 FI 20155330
(43) Date of publication of application: 14.03.2018
(73) Proprietor: Betulium OY, 02150 Espoo (FI)
(72) Inventor: MCKEE, Jason, 00720 Helsinki (FI)
(74) Representative: Espatent Oy
(86) International application number: PCT/FI2016/050285
(87) International publication number: WO 2016/177937

(56) References cited:
- EP-B1- 1 239 740
- US-A- 4 797 297
- US-A- 4 873 111
- US-A- 4 923 981
- US-A1- 2014 363 560
- DINAND E ET AL: "Suspensions of cellulose microfibrils from sugar beet pulp", FOOD HYDROCOLLOIDS, IRL PRESS, OXFORD, GB, vol. 13, 1 January 1999 (1999-01-01), pages 275-283, XP002251873, DOI: 10.1016/S0268-005X(98)00084-8

## Description

### FIELD

The present disclosure relates to feed compositions for animals and to methods for their preparation.

### BACKGROUND

Farmed animals and companion animals are usually fed using dry or wet feed compositions. Animal feed compositions are usually formulated as low cost formulations, most costly ingredients being proteins and amino acids, including the essential amino acids.

Wet feed compositions are used for feeding various animals such as livestock, fur animals, companion animals, cattle, bovine, porcine, poultry, fish, and shrimp. Generally transportation costs of wet feeds are higher than those of dry feeds because of the higher water content. Moreover, wet feed compositions have usually shorter shelf life than dry feeds.

Minks are semiaquatic carnivorous mammals that are typically farmed for clothing appliances. Feed is their primary source of nutrition. As minks are carnivorous, farmed minks currently have a diet mainly focusing on a porridge-like feed, i.e. a semi solid feed formula, which can for example contain as the main components offal (50 %), fish (20 %), and grain (16 %). Typically fur animals, such as minks, are fed with a feed porridge which can be cooked from these components together with added vitamins, and for example protein concentrate (5%), fat (1%) and water (8%), which fulfills their dietary requirements.

Fur animal feed, particularly mink feed, is normally prepared in feed preparation centers and transported to farms. In the farms the feed is supplied, by means of a pump or manually, onto the netting of the cage. The animals then eat the feed through the holes of the netting of the cage. The mesh of a mink cage is typically about 25x25 mm.

The texture of mink feed is of great economical importance in mink farming when the above feeding method is used. Firstly, the feed has to have sufficient stiffness to be suitable for being delivered on top of the animal cages, i.e. it is preferably semi solid. If it is not thick, stiff and tough enough, it will muck up the fur or drop down through the netting and be wasted. In that case the mink does not get enough food and water, which results in poor growth, poor breeding and poor quality of the skin.

US4923981A discloses comestibles incorporating parenchymal cell cellulose and methods for their production.

US2014/363560 discloses a method for producing refined cellulosic material and its use as an additive to improve thickening properties.

Dinand et al., "Suspensions of cellulose microfibrils from sugar beet pulp", FOOD HYDROCOLLOIDS, IRL PRESS, OXFORD, GB, vol. 13, 1 January 1999 (1999-01-01), pages 275-283, discloses production and characterisation of homogenised parenchymal cell cellulose from sugar beet pulp.

US4873111A discloses a method for toughening fur animal feed by including in the feed hydrothermally treated sugar beet slices.

A drawback of the current formulas for feed compositions relates to the added grain. Currently, grain is added to feed porridge to bind the feed porridge together and allow feeding by placing the feed porridge on top of the cage. However, such a feed formula is too energetic for carnivorous animals to fully digest, due to the added grain. Carnivores have relatively short digestive tracks, as they are not required to break down the tough cellulose found in plants. Rather, their main source of nutrition comes from animal flesh. Thus, the feed of carnivorous animals should consist mainly of animal flesh and low-energy-density feed components that force the digestive track to extract nutrients from the offal and fish components. Although grain is an effective binder, it is too energetic. Hence, there is a need for a low-energy-density feed binder that partially of fully replaces grain.

Another drawback of the current formula is the water-content at times when the mothers feed their young, as their water intake is fairly low and cannot keep up with their feeding of their young. The most efficient and straightforward method to hydrate mothers is through the feed by increasing the relative amount of water in the feed. However, this is not possible with the current feed formulas as even small addition of water liquefies the feed resulting into slurry, which drops through the net. It has been shown that even small additions of water (20%) turn the semisolid feed into a flowing viscous paste, i.e. liquefaction, which flows through the mesh, making it unsuitable in this feeding process. Hence, a cost-effective associative binder is required that keeps the feed solid together with added water and is also a suitable feed component for animals.

The object of the present invention is to eliminate above mentioned drawbacks of current feed compositions. A particular object of the invention is to introduce a binder, which allows for a reduction of grain and/or dilution with water, while allowing for excellent feed thickness, stiffness and toughness.

### SUMMARY

The present disclosure relates to novel feed compositions and a method for their preparation as well as to their uses.

According to the first aspect there is provided a feed composition comprising feed and 10%, 9%, 8%, 7%, 6%, 5%, 4%, 3%, 2%, 1%, 0.75% or 0.5% by weight fibrillated parenchymal cellulose, wherein the fibrillated parenchymal cellulose is obtained from soybean hulls, pea hulls, corn hulls, bagasse, corn, vegetables, rice, sugar beet, potato pulp, fruits, or mixtures thereof, wherein: the feed composition is in the form of fodder, compressed feed, pelleted feed, compound feed, pellet, crumble, premix, cake, liquid feed, dry feed, or semi dry feed; the water content of the feed composition is between 5% and 80% by weight of the feed composition; the feed comprises offal, fish offal, protein concentrate, fat, and water; the feed does not contain grain; and the fibrillated parenchymal cellulose is fibrillated to comprise microfibrils or microfibril bundles wherein a length of the microfibril is more than 1 micrometer and the number average diameter is less than 200 nm.

The feed composition comprising feed and fibrillated parenchymal cellulose simultaneously binds water and feed components and also allows for enhanced water retention. Further, the stiffness of the feed composition is sufficient to allow feeding of animals by placing the feed composition on top of cages, i.e. the feed portions remain on top of the cage without dripping or dropping.

Another advantage of the feed composition is that it comprises fibrillated parenchymal cellulose as a low energy-density associative binder, which consists mainly of insoluble cellulose fibrils, pectin and hemicellulose. Adding such an inert binder does not cause ingestion, does not markedly change the relative amounts of other feed components, and does not alter the nutritional or energetic value of the feed porridge when added. Consequently, stiffness and water content of the feed composition can be adjusted as practical by adjusting the amount of fibrillated parenchymal cellulose and water while keeping the total energy content essentially the same (as a dry product). Example 3 provides an experimental setup and a test to assess suitability of a feed composition for feed compositions that are fed by placing them on top of cages. Thus, superfluous feed portions can be avoided when using fibrillated parenchymal cellulose, as well as additional costs caused by possible health problems of the animal.

Another advantage in comparison with the prior art feed compositions is the economy in farming. The present feed composition has a texture and a composition, which makes it possible to increase water content of the feed composition according to hydration need of the animal and without increasing energy content of the feed. Thus, a feed composition having a more natural nutritional profile for carnivores can be provided.

According to the second aspect there is provided a method for manufacturing a feed composition comprising i) providing feed; ii) suspending fibrillated parenchymal cellulose obtained from soybean hulls, pea hulls, corn hulls, bagasse, corn, vegetables, rice, sugar beet, potato pulp, fruits, or mixtures thereof in water; and iii) admixing i) and ii) such that the feed composition comprises 10%, 9%, 8%, 7%, 6%, 5%, 4%, 3%, 2%, 1%, 0.75% or 0.5% by weight of fibrillated parenchymal cellulose, and the water content of the feed composition is between 5% and 80% by weight of the feed composition, wherein the feed comprises offal, fish offal, protein concentrate, fat, and water, the feed does not contain grain, and the fibrillated parenchymal cellulose is fibrillated to comprise microfibrils or microfibril bundles wherein a length of the microfibril is more than 1 micrometer and the number average diameter is less than 200 nm.

The method is simple and easily carried out even at farms. This is particularly advantageous when a feed porridge is purchased and transported to a farm, wherein the final feed composition is prepared. The method allows adjusting e.g. the water content or rheological properties of the feed composition easily by changing the amount of the added fibrillated parenchymal cellulose and water. For example, a stiff feed composition can be obtained by admixing a larger amount of fibrillated parenchymal cellulose and/or smaller amount of water. A high water content feed composition can be obtained by admixing a larger amount of fibrillated parenchymal cellulose. Step ii) can be carried out by mixing a dried fibrillated parenchymal cellulose with water, or by diluting from a concentrated stock. Example 3 provides an example of an assay to test the suitability of the resulting feed composition for feeding through the mesh of the animal cages. When a larger mesh size is used in animal cages, a stifferfeed composition, and an increased amount of fibrillated parenchymal cellulose may be required.

Also disclosed is a use of fibrillated parenchymal cellulose as a binder in feed.

Also disclosed is a use of fibrillated parenchymal cellulose for thickening animal feed, in particular fur animal feed.

Also disclosed is a use of fibrillated parenchymal cellulose for toughening animal feed, in particular fur animal feed.

Also disclosed is a use of fibrillated parenchymal cellulose for increasing water retention capacity of animal feed, in particular fur animal feed.

Also disclosed is a composition comprising fibrillated parenchymal cellulose, an oily substance, and water and/or a water miscible continuous phase, and optionally an emulsifying agent(s). An advantage of the composition is effective stabilization of the oily substance in water or a water miscible continuous phase. Such a composition is useful for example in manufacturing of feed compositions optionally supplemented with insoluble substances.

Also disclosed is a composition comprising fibrillated parenchymal cellulose, an insoluble substance, optionally a stabilizing agent(s), and water and/or a water miscible continuous phase. Such a composition is useful for example in manufacturing of feed compositions.

### BRIEF DESCRIPTION OF THE FIGURES

Fig1. discloses transmission electron microscopy image of fibrillated parenchymal cellulose extracted from sugar beet pulp.
Fig 2. discloses transmission electron microscopy image of fibrillated parenchymal cellulose extracted from potato pulp.
Fig 3A, 3B, 3C and 3D disclose rheological properties of a fibrillated parenchymal cellulose products made from sugar beet and potato according to example 1. The aqueous dispersions are evaluated at 1.0 wt% concentration.

### DETAILED DESCRIPTION

In the context of this invention, the term "emulsion" is a dispersion of "droplets" of one liquid dispersed throughout another liquid called the "continuous phase". Here, the droplets and continuous phases are not soluble or miscible.

In the context of this invention, the term "emulsifier" or "emulsifying agent" is a substance that stabilized emulsions by lowering the surface tension between the droplets and continuous phase. Said emulsifier or emulsifying agent can be an amphiphilic molecule(s), substance with at least one charge, amphiphilic polymer(s), surfactant(s), polymer(s), polyelectrolyte(s), copolymer(s), and/or blockcopolymer(s); or a mixture or the aforementioned substance types. Those skilled in the art know that said emulsifying agents can in some cases also be used as "stabilizing agent" to stabilize insoluble substances.

In the context of this invention, the term "oil" or "oily" is a non-water miscible phase that can be an animal based oil, vegetable oil, tree extract, petrochemical in origin, volatile, non-volatile, natural, and/or chemically modified. The oil or oily substance can also be a mixture of the aforementioned substances.

In the context of this invention, the term "insoluble substance" is a non-soluble substance or component that does not dissolve or suspend into the continuous phase, preferably water or water miscible phase. The insoluble phase can be a vitamin, mineral, feed additive or a feed ingredient. The insoluble substance can also be a mixture of the aforementioned substance types.

The raw material which is used to produce the fibrillated parenchymal cellulose according to the present invention may be obtained from any suitable plant source, including plant species that predominantly contain parenchymal cell types and wherein the majority of the cellulose is located in primary cell walls. Suitable raw materials include soybean hulls, pea hulls, corn hulls, bagasse, corn, vegetables, rice, sugar beet, potato pulp, fruits and mixtures thereof. Especially well suitable raw materials are sugar beet pulp, bagasse pulp, potato pulp and mixtures thereof.

Raw materials of which soluble polysaccharides, such as pectin, have been at least partially removed by a raw material producer are especially well suitable raw materials. Examples of these kinds of materials are parenchymal cellulose rich side streams from pectin factories using e.g. citrus peel, apple residuals, or sugar beet as a pectin source. Correspondingly, parenchymal cellulose rich side streams from starch factories are especially well suitable raw materials.

Preferably the parenchymal cellulose is obtained from purified, optionally bleached parenchymal cellulose. Even more preferably the cellulose is substantially free from wood-based cellulose structures present in secondary cell walls.

The parenchymal cellulose raw material which is used to produce the fibrillated parenchymal cellulose may be fresh, never dried, or dried.

Fibrillated parenchymal cellulose in this context means cellulose microfibrils or a cellulose microfibril bundle isolated from the above-mentioned raw materials. The aspect ratio of the microfibrils is typically very high; the length of the microfibrils may be more than one micrometer and the number-average diameter is typically less than 200 nm, such as between 2 and 100 nm. The diameter of microfibril bundles may be greater, but it is usually less than 1 µm. The smallest microfibrils are similar to the so-called elemental fibrils, the diameter of which is typically 2 to 12 nm. Fibrillated parenchymal cellulose may also contain other polysaccharides, such as pectin, the amount of which depends on the raw material used and the extent of extraction. Fibrillated parenchymal cellulose may also be in a form of expanded fibrillar network, where individual microfibrils or microfibril bundles are still partially bound to each other, even after the fibrillation stage. The diameter of these assemblies is typically 10 to 500 micrometers when diluted into water. Fibrillated parenchymal cellulose can be isolated from the above-described cellulose-containing raw material with an apparatus suitable for the purpose, e.g. a grinder, comminutor, rotor-stator mixer or grinders such as Ultra-Turrax, Masuko from Masuko Sangyo, rotor-rotor mixers or grinders such as Atrex-type devices, homogenizer such as Ariete-type or Panda-type from GEA Niro-Soavi, fluidizer, micro-or macrofluidizer such as microfluidizer from Microfluidics and/or ultrasonic disintegrator.

In general, native cellulose is in a microfibrillate form, these microfibrils being associated to a greater or lesser degree to form fibers, walls and membranes. Each cellulosic microfibril is constituted by a rigorous assembly of parallel cellulose chains resulting from the method by which the cellulose is biosynthesized. Cellulose microfibrils are generally considered to contain only few faults along their axis. Their mechanical properties are close to the theoretical mechanical properties of cellulose: a tenacity in the order of up to 130 GPa and a fracture toughness in the order of up to 13 GPa. Cellulosic microfibrils are thus of interest if they can be dissociated into single fibres.

Cellulose microfibrils are usually associated to a high degree in walls or fibers. The microfibrils in secondary walls are organized into highly oriented layers, which form a fiber that cannot be dissociated; the microfibrils in primary walls are deposited in a disorganized fashion. The parenchyma is a typical example of primary wall tissue. While it is difficult, if not impossible, to separate secondary wall cellulose microfibrils without damaging them, it is easy to dissociate primary wall microfibrils, not only because of their looser organization but also because interstitial polysaccharides, which are usually anionically charged, constitute a large percentage of these walls.

Fibrillated parenchymal cellulose forms a continuous gel when dispersed in water, even at low concentration. A continuous gel in this context means a mixture of fibrillated parenchymal cellulose and water, where the fibrillated parenchymal cellulose component does not settle out of the continuous phase at rest and where G'>G", where G' is the dynamic storage modulus and G" is the dynamic loss modulus.

The tangent of the phase angle, i.e. the ratio of loss modulus (G") to storage modulus (G') is a useful quantifier of the presence and extent of elasticity in a fluid. tan( 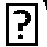 ) values of less than unity indicate elastic-dominant (i.e. solid-like) behavior and values greater than unity indicate viscous-dominant (i.e. liquid-like) behavior.

The fibrillated parenchymal cellulose may have a Brookfield viscosity, measured at a consistency of 1.0%, of at least 10 Pa.s, advantageously at least 100 Pa s. In addition to the high viscosity, the aqueous fibrillated parenchymal cellulose dispersions obtained are also characterized by so-called shear thinning; that is, the viscosity decreases as the shear rate increases.

There are several widely used synonyms for fibrillated cellulose. For example: nanocellulose, microfibrillar cellulose, nanofibrillated cellulose, cellulose nanofiber, nano-scale fibrillated cellulose, microfibrillated cellulose (MFC), or cellulose microfibrils.

After fibrillation the parenchymal cellulose of the present invention has improved rheological properties and the resulting gel comprising the fibrillated parenchymal cellulose in an aqueous medium has increased viscosity and yield stress.

The fibrillated parenchymal cellulose may be used to modify one or more of the viscosity, suspension stability, formulation insensitivity to temperature, shear reversible gelation, yield stress, and liquid retention of a composition of matter. Compositions whose rheological properties may be modified in this manner include feed compositions. In such compositions the fibrillated parenchymal cellulose may act as a binder to synergistically enhance the rheological properties of the feed. Such compositions can be prepared by admixing the fibrillated parenchymal cellulose in the composition.

In certain embodiments the feed composition is a composition for fur animals.

The feed composition is in the form of fodder, compressed feed, pelleted feed, compound feed, pellet, crumble, premix, cake, liquid feed, dry feed, or semi dry feed.

The feed composition is manufactured by adding to a conventional feed fibrillated parenchymal cellulose suspended in water. In certain embodiments the feed is mink feed, and the mink feed is diluted with water and added with fibrillated parenchymal cellulose suspended in water. Adding the fibrillated parenchymal cellulose as a suspension in water has an advantage of facilitating mixing of the fibrillated parenchymal cellulose in the feed composition.

The feed composition obtained by the method may improve thickness and/or toughness of the feed composition compared to a reference feed composition without added fibrillated parenchymal cellulose.

In certain embodiments water and fibrillated parenchymal cellulose are added to the feed to obtain a feed composition. Fibrillated parenchymal cellulose solids are suitably added such that the amount of fibrillated parenchymal cellulose solids is 10, 9, 8, 7, 6, 5, 4, 3, 2, 1, 0.75 or 0.5 wt.% of the total weight of the feed composition containing all the components, i.e. feed, added water and fibrillated parenchymal cellulose. This concentration range is particularly useful for feed applications, as the fibrillated parenchymal cellulose forms a continuous stiff hydrogel at low fibrillated parenchymal cellulose content and stabilizes the feed composition. As an example, when 10% of a 1% suspension of fibrillated parenchymal cellulose is present in a feed composition, the amount of fibrillated parenchymal cellulose solids in the feed composition is 0.1%.

The relative grain content of the feed composition is completely removed and replaced fully by fibrillated parenchymal cellulose.

The fibrillated parenchymal cellulose is capable of forming a continuous gel in water throughout the concentration range of between about 0.05 % and about 99%, such as throughout the concentration range of between about 0.5 % and about 50 %, or at 0.1%, 0.2%, 0.3%, 0.4%, 0.5%, 0.6%, 0.7%, 0.8%, 0.9%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 15%, 20%, 25%, 30%, 35%, 40%, 45%, 46%, 47%, 48%, 49%, 50%, 51%, 52%, 53%, 54%, 55%, 60%, 65%, 70%, 75%, 80%, 85%, 90%, 91%, 92%, 93%, 94%, 95%, 96%, 97%, 98%, or 99% in water.

The water content of the feed composition is selected from the range between 5% and 80% by weight of the feed composition, such as 5%, 6%, 7%, 8%, 9%, 10%, 15%, 20%, 25%, 30%, 35%, 40%, 45%, 50%, 55%, 60%, 65%, 70%, 75%, or 80% by weight of the feed composition.

The feed composition comprises offal, fish offal, protein concentrate, fat, water, and not more than 10% by weight, such as 10%, 9%, 8%, 7%, 6%, 5%, 4.5%, 4%, 3.5%, 3%, 2.5%, 2%, 1.5%, 1%, or 0.5% by weight, or lower by weight fibrillated parenchymal cellulose.

The feed composition does not contain added grain. The solids content of the feed composition may be selected from the range between 95% and 20% by weight of the feed composition, such as from the range between 30 and 40 % by weight of the feed composition. In an embodiment the feed composition is a fur animal feed.

In an embodiment in the method of the second aspect the feed composition is the feed composition according to any one of the preceding embodiments or the aspect 1.

In an embodiment in the method of the second aspect the feed composition is for feeding fur animals, minks, aquatic animals, marine animals, fish, pets, companion animals, preferably minks.

The the parenchymal cellulose raw material may be washed with an alkali before fibrillation. Alternatively, the parenchymal cellulose raw material is washed with an acid followed by alkali wash before fibrillation. After the alkali treatment a dark brown viscous mass can be obtained. Alternatively, the parenchymal cellulose raw material is washed with water followed by filtration before fibrillation.
Optionally, the alkali wash is followed by filtration and washing with water. After the filtration and washing a pale grey viscous mas can be obtained.

The may be fibrillation carried out in an aqueous medium at a concentration of not more than 10% by weight, such as 10%, 9%, 8%, 7%, 6%, 5%, 4.5%, 4%, 3.5%, 3%, 2.5%, 2%, 1.5%, 1%, or 0.5% by weight, or lower.

The fibrillation may be carried out in an aqueous medium at a cellulose concentration of not more than 25% by weight, such as 25%, 20%, 15%, 12%, 10%, 8%, 6%, 4%, or 2% by weight, or lower.

In the method, the step ii) can be carried out by fibrillating parenchymal cellulose and directly taking it to step iii) to admix with the feed.

The feed may be wet or semi dry feed.

The feed may have a water content of at least 20% by weight. In an embodiment the feed is fur animal feed, mink feed, aquatic animal feed, marine animal feed, fish feed, pet feed, or companion animal feed.

The following embodiments are not according to the invention and are present for illustration purposes only.

In an embodiment of fibrillated parenchymal cellulose is mixed with an oily substance, and water and/or a water miscible phase.

In an embodiment the oily substance is stabilized into an emulsion.

In an embodiment the fibrillated parenchymal cellulose is used to form a shear-thinning gel network to stabilize oily substances in a continuous aqueous phase.

In an embodiment the amount of fibrillated parenchymal cellulose is no more that 10% by weight.

In an embodiment the composition comprises at least one emulsifying agent.

In an embodiment the amount of emulsifying agent is no more that 10% by weight.

In an embodiment the composition is for use as feed for fur animals, aquatic animals, marine animals, fish, pets, companion animals or domesticated farm animals, preferably domesticated farm animals

In an embodiment the continuous aqueous phase contains feed ingredients and/or additives.

In an embodiment the oily phase contains feed ingredients and/or additives.

In an embodiment the oily phase is a feed ingredient or additive.

In an embodiment fibrillated parenchymal cellulose is used to form a shear-thinning gel network to stabilize oily substances in water and/or a water miscible phase.

In an embodiment the continuous water miscible phase contains feed ingredients and/or additives.

In an embodiment the continuous water miscible phase is a feed ingredient that optionally contains additives.

In an embodiment the oily substance is selected from a non-water miscible oil that is animal based, vegetable based, plant based, extracted from trees, petrochemical in origin, volatile, non-volatile, natural, and/or chemically modified, or combinations thereof.

In an embodiment the oily substance is selected from extracts of animal based oils, vegetable based oils, plant based oils, tree based oil, petrochemical based oils, volatile oils, non-volatile oils, natural oils, and/or chemically modified oils, or combinations thereof.

In an embodiment fibrillated parenchymal cellulose is used to form a shear-thinning gel network to stabilize oily substances in a continuous aqueous phase or water miscible phase, together with an emulsifying agent.

In an embodiment the emulsifying agent comprises amphiphilic molecule(s), substance with at least one charge, amphiphilic polymer(s), surfactant(s), polymer(s), polyelectrolyte(s), copolymer(s), and/or blockcopolymer(s); or a mixture of the aforementioned substance types.

In an embodiment the amount of fibrillated parenchymal cellulose used to form a shear-thinning gel network to stabilize oily substances is 10%, 9%, 8%, 7%, 6%, 5%, 4.5%, 4%, 3.5%, 3%, 2.5%, 2%, 1.5%, 1%, 0.5%, 0.25%, 0.1% by weight or lower.

In an embodiment the amount of emulsifying agent used with the fibrillated parenchymal cellulose to stabilize oily substances in water or water miscible phase is 10%, 9%, 8%, 7%, 6%, 5%, 4.5%, 4%, 3.5%, 3%, 2.5%, 2%, 1.5%, 1%, 0.5%, 0.25%, 0.1% by weight or lower.

In an embodiment the emulsion stabilized with fibrillated parenchymal cellulose and/or an emulsifying agent contains gas bubbles such as air bubbles.

In an embodiment gas bubbles such as air bubbles are removed from the emulsion stabilized with fibrillated parenchymal cellulose with or without an emulsifying agent. This can be achieved by degassing means, such as by using a vacuum.

In an embodiment the emulsion stabilized using fibrillated parenchymal cellulose with or without and emulsifying agent and is used as feed.

In an embodiment the emulsion stabilized using fibrillated parenchymal cellulose with or without and emulsifying agent is stable up to 1 week.

In an embodiment the emulsion stabilized using fibrillated parenchymal cellulose with or without and emulsifying agent is stable up to 4 months.

In an embodiment the emulsion stabilized using fibrillated parenchymal cellulose with or without and emulsifying agent is stable up to 9 months.

In an embodiment the emulsion stabilized using fibrillated parenchymal cellulose with or without and emulsifying agent is stable up to 24 months.

In an embodiment of the composition comprises fibrillated parenchymal cellulose mixed with an insoluble substance, and water and/or a water miscible phase. In an embodiment the insoluble substance is stabilized into a dispersion or a suspension. In an embodiment the amount of fibrillated parenchymal cellulose is no more that 10% by weight. In another embodiment the composition comprises at least one stabilizing agent, and optionally the amount of stabilizing agent is no more that 10% by weight.

In an embodiment the composition is used as feed for fur animals, aquatic animals, marine animals, fish, pets, companion animals or domesticated farm animals, preferably domesticated farm animals.

In an embodiment the emulsion stabilized using fibrillated parenchymal cellulose contains an insoluble substance.

In an embodiment the emulsion and insoluble substance is stabilized using fibrillated parenchymal cellulose and optionally an emulsifying agent and/or stabilizing agent.

In an embodiment the emulsifying agent is the same substance as the stabilizing agent.

In an embodiment the emulsifying agent is a different substance than the stabilizing agent.

In an embodiment the fibrillated parenchymal cellulose is used to form a shear-thinning gel network to stabilize at least one insoluble substance into a continuous aqueous phase.

In an embodiment the insoluble substance is a vitamin, mineral, feed additive, a feed ingredient or a mixture thereof.

In an embodiment the stabilizing agent is an amphiphilic molecule(s), substance with at least one charge, amphiphilic polymer(s), surfactant(s), polymer(s), polyelectrolyte(s), copolymer(s), and/or blockcopolymer(s); or a mixture or the aforementioned substance types.

In an embodiment fibrillated parenchymal cellulose is used to form a shear-thinning gel network to stabilize insoluble substances in water and/or a water miscible phase.

### EXAMPLES

The following examples are provided to illustrate various aspects of the present invention. They are not intended to limit the invention, which is defined by the accompanying claims.

### Example 1

### Production of fibrillated parenchymal cellulose based on potato pulp

Concentrated potato pulp was purified in a lye wash. Here, the potato pulp (solids 2500 g) was taken to a 25 g/L suspension and heated to 60-90°C. With gentle stirring, 20 g/L NaOH was added. During this time, the hydrated potato clippings lost their solid-like morphology and broke down into a dark brown viscous mass within a minute. After 120 minutes of stirring, the reaction was cooled down and filtrated through a steel screen (0.25 mm pore size). The lye-washed pale grey cellulosic potato mass was further washed with copious amounts of water. The obtained material was dispersed into water at 3.5 wt% concentration and fibrillated using a high speed grinder at pH 8-10.

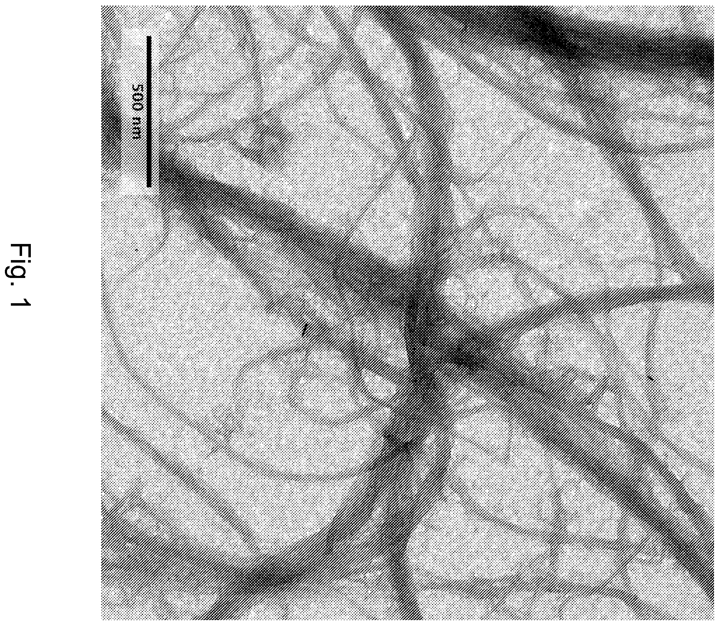

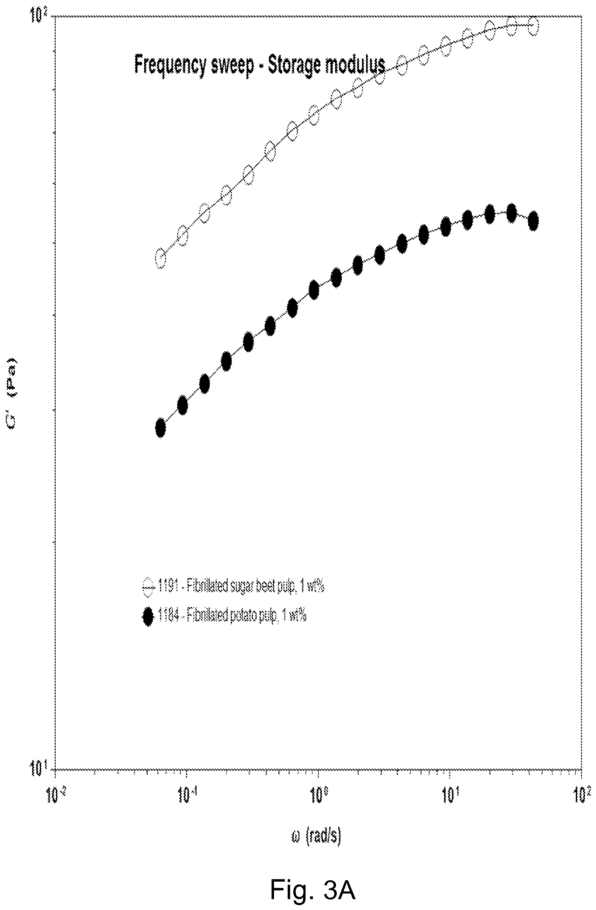

The resulting fibrillated parenchymal cellulose was characterized using transmission electron microscopy (FIG. 1) and rheology (FIG. 3A-3D).

### Production of fibrillated parenchymal cellulose based on sugar beet pulp

Compressed sugar beet pulp from a sugar factory was purified in a two-step process. Sugar beet clippings (2500 dry g) were taken to a 25 g/L suspension. The pH of the reaction suspension was set to 2, using 1.0 M HCl. The suspension of sugar beet pulp was heated to 70-80 degrees and gently stirred for 120 minutes. Next, the ensuing beet clippings were filtered through a steel mesh screen (0.25 mm pore size) and further washed with copious amounts of water.

After the acid wash, the hydrated sugar beet pulp was washed in lye. Here, pulp was taken to a 25 g/L suspension and heated to 70-80°C. With gentle stirring, 20 g/L NaOH was added. During this time, the hydrated beet clippings lost their solid-like morphology and broke down into a dark brown viscous mass. After 120 minutes of stirring, the reaction was cooled down and filtrated through a steel screen (0.25 mm pore size). The lye-washed pale grey cellulosic sugar beet mass was further washed with copious amounts of water. The obtained material was dispersed into water at 3.5 wt% concentration and fibrillated using a high speed grinder at pH 8-10.

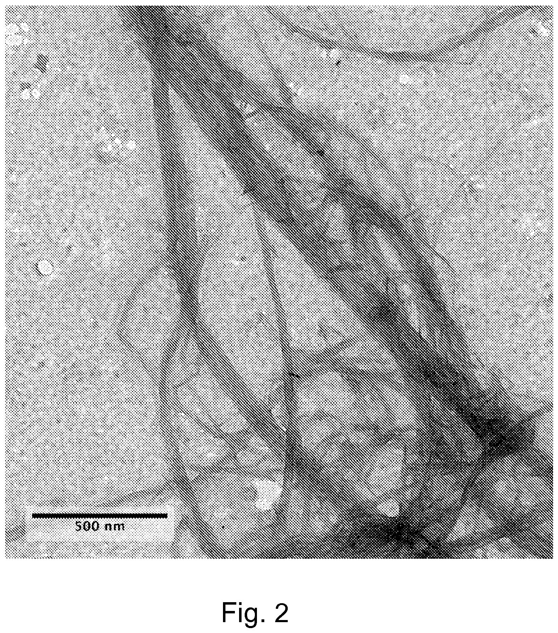

The resulting pulp was characterized using transmission electron microscopy (FIG. 2) and rheology (FIG. 3A-3D).

### Example 2 - Rheological characterization of fibrillated, unbleached parenchymal cellulose based on potato or sugar beet pulp

### Rheological measurements

The measurements were performed at 25 °C using a dynamic rotational rheometer (HR-2, TA Instruments). The geometry used was stainless steel concentric cylindrical geometry consisting of a four bladed vane, radius 14.00 mm, height 42.00 mm, in a cup, radius 15.20 mm, the gap fulfilling the standard ISO 3219/DIN 53019.

The measurement routine for fibrillated cellulose suspensions is presented in Table 1. The purpose of the peak hold and time sweep interval in between amplitude sweep, frequency sweep and both shear stress and shear rate controlled stepped flow intervals was to set a comparable shear history to the samples. The linear viscoelastic region was determined with an oscillatory amplitude sweep. Frequency sweep was performed to probe the fiber network structure at rest, and stepped flow curves were to characterize the flow properties of the suspensions. Shear stress controlled flow curve may be better able to reveal yielding in the suspension, whereas shear rate controlled flow curve is more directly linked to the flow rate, i.e. rate of deformation in the suspension structure.

**Table 1. Rheological measurement intervals.**

| Interval | Measuring sequence |
|---|---|
| 1 | Peak hold, 500 s-1, 3 min |
| 2 | Time sweep 1%, 1Hz, 3 min |
| 3 | Amplitude sweep, 0.01 - 1000 %, 1Hz |
| 4 | Peak hold, 500 s-1, 3 min |
| 5 | Time sweep 1%, 1Hz, 3 min |
| 6 | Frequency sweep, 100-0.01 Hz, 1% |
| 7 | Peak hold, 500 s-1, 3 min |
| 8 | Time sweep 1%, 1Hz, 3 min |
| 9 | Stepped flow, Shear stress controlled, 0.1-1000 mNm pt^{a)}·15/5s |
| 10 | Peak hold, 500 s-1, 3 min |
| 11 | Time sweep 1%, 1Hz, 3 min |
| 12 | Stepped flow, Shear rate controlled, 500-0.05 s-1, pt^{a)} 15/5s |

| | |
|---|---|
| a) pt is short for point time, 15 s, of which the average of last 5 s recorded | |

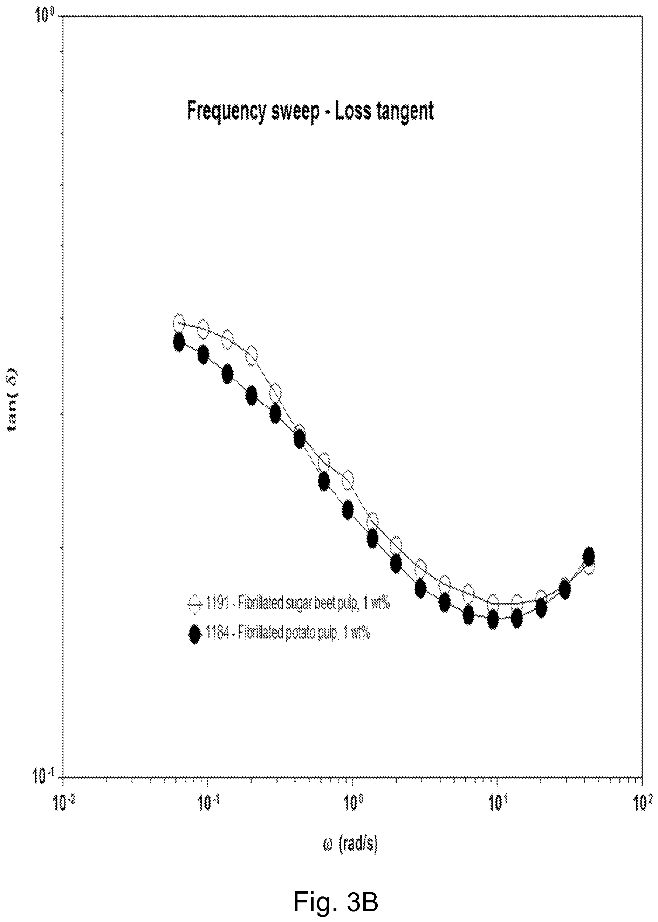

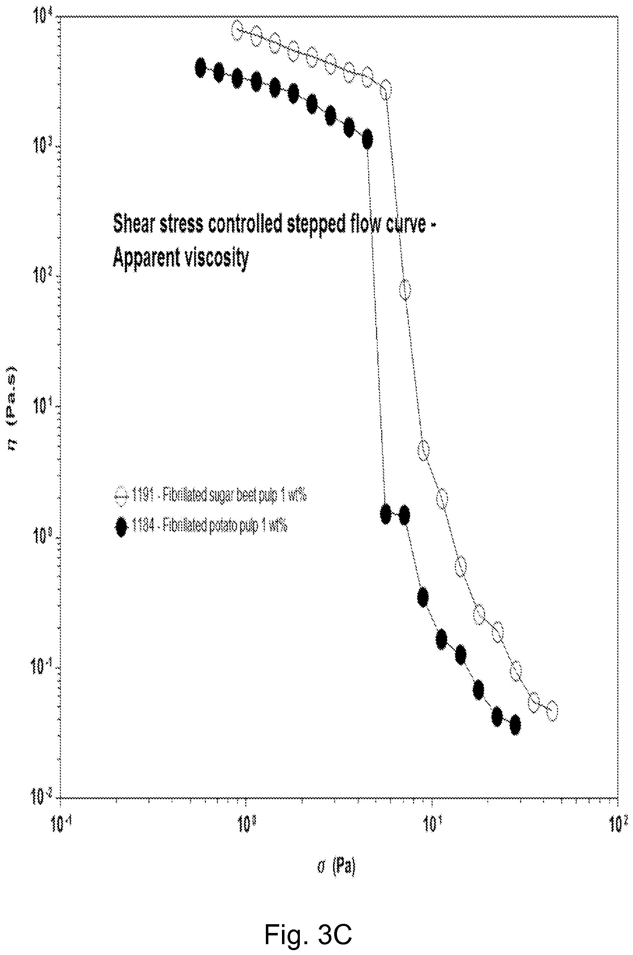

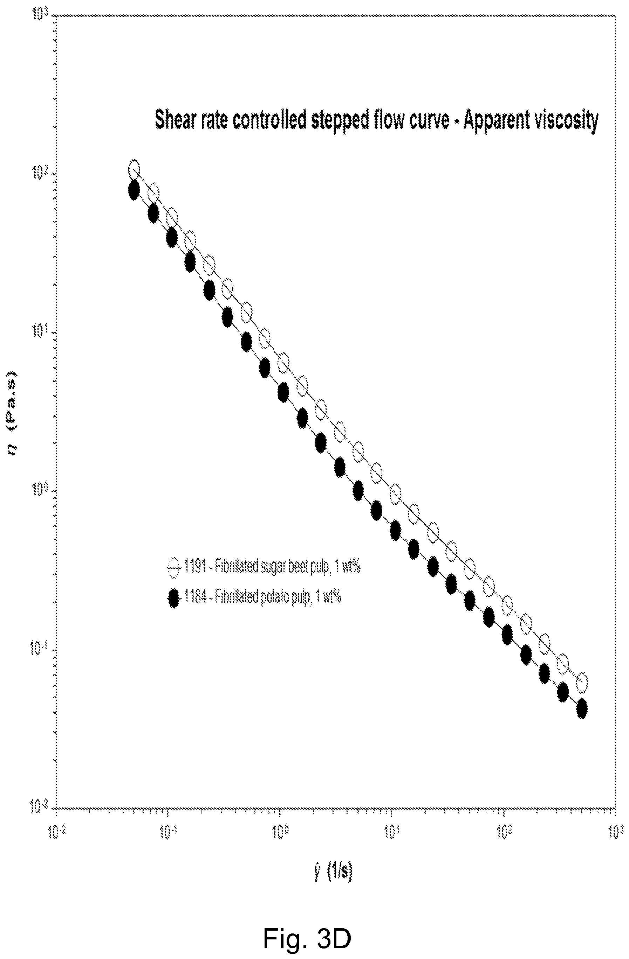

**Results.** The rheological behavior of the fibrillated, unbleached potato and sugar beet pulp sample is presented in Fig. 3 A-D. In both cases, the frequency sweeps reveal gel-like rheological behavior at 1 wt % consistency: G' is constant over wide range of frequencies (Fig. 3 A), and the tan( 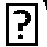 ) < 1, i.e. the response is elastically dominated ( G' > G", Fig. 3 B). The samples show also yield stress type behavior (Fig. 3 C), and are markedly shear thinning in steady shear experiments (Fig. 3 D). The structures of the samples were homogeneous, continuous gel structure without observable phase separation during the experiment or the preceding storage time. Fibrillated sugar beet sample formed a little more rigid gel structure compared to fibrillated potato sample, as is evident from the higher storage modulus in frequency sweep measurement (Fig. 3A) and higher apparent viscosity and yield stress (Fig. 3 C).

### Viscosity and turbidity

The viscosity of a fibrillated sugar beet parenchymal cellulose sample, obtained according to example 1, was measured by Brookfield DV3T viscosimeter (Brookfield Engineering Laboratories, Middleboro, USA) equipped with a vane geometry (V-72, diameter 21.67 mm, length 43.38 mm). The product was diluted with waterto a concentration of 1.0 wt%, and the sample was agitated for 10 min before the measurement followed by degassing in vacuum to remove the entrapped air bubbles in the sample. The temperature was adjusted to 20 °C prior to measurements. The viscosity of the samples was measured at 50 and 100 rpm shear rates.

Turbidity of dilute aqueous dispersions of the fibrillated sugar beet parenchymal cellulose was measured with HACH P2100 turbidimeter. The product was diluted with water to a concentration of 0.1 wt%, and the sample was agitated for 10 min before the measurement followed by degassing in vacuum to remove the entrapped air bubbles in the sample. The temperature was adjusted to 20 °C prior to the measurement where the emission of light scattered from particles of a sample was detected

**Table 2. Summary of the turbidity and viscosity results for a fibrillated sugar beet parenchymal cellulose sample, obtained according to example 1.**

| Sample | Turbidity (NTU) | Viscosity 50 rpm (Pa s) | Viscosity 100 rpm (Pa s) |
|---|---|---|---|
| Fibrillated parenchymal cellulose | 430 | 781 | 460 |

### Example 3 not according to the present invention Feed formulation:

Herein, water and fibrillated parenchymal cellulose were added to mink feed to test how the feed mixture could retain water. Here, the fibrillated parenchymal cellulose acts as a binder to synergistically enhance the rheological properties of the feed. Depending on the amount of water, fibrillated parenchymal cellulose was added from 0 to 1 wt.% vs. the feed weight containing all the components, i.e. added water and the fibrillated parenchymal cellulose. The resulting feed was characterized by placing in in a mesh (25*25 mm eye-hole) and observing how it behaves: how much does the modified feed propagate throughout the mesh during 60 minutes (Table 3).

Basic composition of the mink feed was following: Offal (50 %); Fish offal (20 %); Grain products (16 %); Protein concentrate (5 %); Water (8 %); and Fat (1 %). The solid content was between 30-40 % and the stiffness excellent.

Water and sugar beet based fibrillated parenchymal cellulose were mixed at different concentrations and added into the basic mink feed formulation described above. The exact amounts of the formulation are described in Table 3.

**Table 3. Tabulated data on all the samples.**

| Sample (#) | Mink feed (g) | Added water (g) | Total sample mass (g) | Fibrillated parenchymal cellulose solids (g) | Fibrillated parenchymal cellulose concentration vs. total sample mass (g/L) | Amount of feed sample that went through the mesh (%) |
|---|---|---|---|---|---|---|
| REF. | 250 | 50 | 300 | 0 | 0 | >75 |
| 1 | 250 | 50 | 300 | 1.5 | 5.0 | 0 |
| 2 | 250 | 100 | 350 | 2.625 | 7.5 | 5 |
| 3 | 250 | 150 | 400 | 4.0 | 10.0 | 15 |
| 4 | 500 | 100 | 600 | 3.0 | 5.0 | 1 |
| 5 | 500 | 100 | 600 | 1.5 | 2.5 | >75 |

**Reference sample.** Water (50 g) was added to 250 g feed. The resulting mixture was placed on a 25*25 mm mesh. After 1 minute the sample had propagated through the mesh. This indicated that even relatively small additions of water transform the feed's solid-like morphology to a more viscous fluid, i.e. a liquefied sample.

**Sample** 1. 0.5% fibrillated parenchymal cellulose loading vs. the total sample mass with 20% more water. 250 g of mink feed was weighed. Here, 50 g of fibrillated parenchymal cellulose dispersion (fibrillated parenchymal cellulose: 1.50 g) was mixed in. Next, the sample was placed on a mesh (25*25 mm eye hole) and left for 1 hour. According to the results, this sample was highly stable and no feed propagated through the mesh indicating successful water addition, i.e. excellent stiffness.

**Sample 2**. 0.75% fibrillated parenchymal cellulose loading with 40 % more water. 250 g of mink feed was weighed. Here, 100 g fibrillated parenchymal cellulose dispersion (fibrillated parenchymal cellulose: 2.625 g) was mixed in. Next, the sample was placed on a mesh (25*25 mm eye hole) and left for 1 hour. According to the results, this sample was stable and only 20 g feed propagated through the mesh indicating successful water addition, i.e. excellent stiffness.

**Sample 3.** 1.00% fibrillated parenchymal cellulose loading with 60 % more water. 250 g of mink feed was weighed. Here, 150 g fibrillated parenchymal cellulose dispersion (fibrillated parenchymal cellulose: 4.0 g) was mixed in. Next, the sample was placed on a mesh (25*25 mm eye hole) and left for 1 hour. According to the results, this sample was fairly stable and 50 g feed propagated through the mesh indicating fairly successful water addition, i.e. good stiffness.

**Sample 4.** 0.5% fibrillated parenchymal cellulose loading with 20% more water. 500 g of mink feed was weighed. Here, 100 g fibrillated parenchymal cellulose dispersion (fibrillated parenchymal cellulose: 3.0 g) was mixed in. Next, the sample was placed on a mesh (25*25 mm eye hole) and left for 1 hour. According to the results, this sample was stable and only 20 g feed propagated through the mesh indicating successful water addition, i.e. excellent stiffness.

**Sample 5**. 0.25% fibrillated parenchymal cellulose loading with 20% more water. 500 g of mink feed was weighed. Here, 100 g of fibrillated parenchymal cellulose dispersion (fibrillated parenchymal cellulose: 1.5 g) was mixed in. Next, the sample was placed on a mesh (25*25 mm eye hole). According to the results, this sample was highly unstable and most of the sample went through the mesh after a minute, over 75 % propagated through, i.e. a liquefied sample.

### Example 4 not according to the present invention

### Sample A - Stabilizing oily substance in a continuous aqueous phase

2.0 mass.% tall oil was stabilized into a water phase using fibrillated parenchymal cellulose (0.5 mass.%) and lecithin (1.0 mass.%) by combining all the components and utilizing high-shear mixing. An emulsion was formed that was stable at 4 months.

### Sample B - Stabilizing oily substance in a continuous water phase

2.0 mass.% tall oil was stabilized into a water phase using fibrillated parenchymal cellulose (0.5 mass.%) by combining all the components and utilizing high-shear mixing. An emulsion was formed that was stable at 1 week.

### Sample C - Stabilizing oily substance in a continuous water miscible phase

2.0 mass.% tall oil was stabilized into a water miscible phase using fibrillated parenchymal cellulose (0.5 mass.%) and lecithin (1.0 mass.%) by combining all the components and utilizing high-shear mixing. An emulsion was formed that was stable at 4 months. In this example, the water miscible phase is a polyol mixture mainly containing: 20-40 % water, 35-50 % xylitol, 10-20 % mannitol, 5-15 % sorbitol - by weight.

### Sample D - Stabilizing oily substance in a continuous water miscible phase

2.0 mass.% tall oil was stabilized into a water miscible phase using fibrillated parenchymal cellulose (0.5 mass.%) and lecithin (1.0 mass.%) by combining all the components and utilizing high-shear mixing. An emulsion was formed that was stable at 4 months. In this example, the water miscible phase is a polyol mixture mainly containing: 20-40 % water, 15-30 % xylitol, 5-20 % mannitol, 2-15 % sorbitol, 20-60 % propylene glycol - by weight.

Without limiting the scope and interpretation of the patent claims, certain technical effects of one or more of the aspects and embodiments disclosed herein are listed in the following: a technical effect is a feed composition which contains sufficiently water and is suitable for feeding caged fur animals. Another technical effect is an economical binder for feed compositions and for liquid feed in particular. Another technical effect is providing a low energy binder for animal feed. Another effect is ease of increasing water content of animal feed composition while retaining mechanical and rheological properties of the feed. Another advantage is improving rheological, economical, water retention capacity, nutritional and handling properties of fodder, compressed feed, pelleted feed, compound feed, pellet, crumble, premix, cake, liquid feed, dry feed, semi dry feed, animal feed, fish feed, fur animal feed, mink feed, aquatic animal feed, marine animal feed, fish, pet feed, companion animal feed. Another advantage is stabilization of oily substances in water or in water miscible phase. One or more advantages may be obtained.

The scope of the invention is only restricted by the appended patent claims.

## Claims

1. A feed composition comprising feed and 10%, 9%, 8%, 7%, 6%, 5%, 4%, 3%, 2%, 1%, 0.75% or 0.5% by weight fibrillated parenchymal cellulose solids, wherein the fibrillated parenchymal cellulose is obtained from soybean hulls, pea hulls, corn hulls, bagasse, corn, vegetables, rice, sugar beet, potato pulp, fruits, or mixtures thereof, wherein:
the feed composition is in the form of fodder, compressed feed, pelleted feed, compound feed, pellet, crumble, premix, cake, liquid feed, dry feed, or semi dry feed;
the water content of the feed composition is between 5% and 80% by weight of the feed composition;
the feed comprises offal, fish offal, protein concentrate, fat, and water;
the feed does not contain grain; and
the fibrillated parenchymal cellulose is fibrillated to comprise microfibrils or microfibril bundles wherein a length of the microfibril is more than 1 micrometer and the number average diameter is less than 200 nm.

2. The feed composition of claims 1 wherein the feed composition is a fur animal feed.

3. A method for manufacturing a feed composition accordingto claim 1 comprising i) providing feed; ii) suspending fibrillated parenchymal cellulose obtained from soybean hulls, pea hulls, corn hulls, bagasse, corn, vegetables, rice, sugar beet, potato pulp, fruits, or mixtures thereof in water; and iii) admixing i) and ii) such that the feed composition comprises 10%, 9%, 8%, 7%, 6%, 5%, 4%, 3%, 2%, 1%, 0.75% or 0.5% by weight of fibrillated parenchymal cellulose solids, and the water content of the feed composition is between 5% and 80% by weight of the feed composition, wherein
the feed comprises offal, fish offal, protein concentrate, fat, and water,
the feed does not contain grain, and
the fibrillated parenchymal cellulose is fibrillated to comprise microfibrils or microfibril bundles wherein a length of the microfibril is more than 1 micrometer and the number average diameter is less than 200 nm.

4. The method of claim 3 wherein the feed composition is for feeding fur animals, minks, aquatic animals, marine animals, fish, pets, companion animals, preferably minks.

## Patentansprüche

1. Futterzusammensetzung, umfassend Futter und 10 Gew.-%, 9 Gew.-%, 8 Gew.-%, 7 Gew.-%, 6 Gew.-%, 5 Gew.-%, 4 Gew.-%, 3 Gew.-%, 2 Gew.-%, 1 Gew.-%, 0,75 Gew.-% oder 0,5 Gew.-% fibrillierte parenchymale Cellulosefeststoffe, wobei die fibrillierte parenchymale Cellulose aus Sojabohnenschalen, Erbsenschalen, Maisschalen, Bagasse, Mais, Gemüse, Reis, Zuckerrüben, Kartoffelpülpe, Früchten oder Gemischen davon erhalten wird, wobei:
die Futterzusammensetzung in Form von Tierfutter, komprimiertem Futter, pelletiertem Futter, Mischfutter, Pellet, Streusel, Vormischung, Kuchen, Flüssigfutter, Trockenfutter oder Halbtrockenfutter vorliegt;
der Wassergehalt der Futterzusammensetzung zwischen 5 Gew.-% und 80 Gew.-% der Futterzusammensetzung liegt;
das Futter Innereien, Fischinnereien, Proteinkonzentrat, Fett und Wasser umfasst;
das Futter kein Korn enthält; und
die fibrillierte parenchymale Cellulose fibrilliert ist, um Mikrofibrillen oder Mikrofibrillenbündel zu umfassen, wobei eine Länge der Mikrofibrille mehr als 1 Mikrometer beträgt und der zahlendurchschnittliche Durchmesser weniger als 200 nm beträgt.

2. Futterzusammensetzung nach Anspruch 1, wobei die Futterzusammensetzung ein Pelztierfutter ist.

3. Verfahren zur Herstellung einer Futterzusammensetzung nach Anspruch 1, umfassend: i) Bereitstellen von Futter; ii) Suspendieren von fibrillierter parenchymaler Cellulose, erhalten von Sojabohnenschalen, Erbsenschalen, Maisschalen, Bagasse, Mais, Gemüse, Reis, Zuckerrüben, Kartoffelpülpe, Früchten oder Gemischen davon in Wasser; und iii) Beimischen von i) und ii), sodass die Futterzusammensetzung 10 Gew.-%, 9 Gew.-%, 8 Gew.-%, 7 Gew.-%, 6 Gew.-%, 5 Gew.-%, 4 Gew.-%, 3 Gew.-%, 2 Gew.-%, 1 Gew.-%, 0,75 Gew.-% oder 0,5 Gew.-% der fibrillierten parenchymalen Cellulosefeststoffe umfasst und der Wassergehalt der Futterzusammensetzung zwischen 5 Gew.-% und 80 Gew.-% der Futterzusammensetzung liegt, wobei
das Futter Innereien, Fischinnereien, Proteinkonzentrat, Fett und Wasser umfasst,
das Futter kein Korn enthält und
die fibrillierte parenchymale Cellulose fibrilliert ist, um Mikrofibrillen oder Mikrofibrillenbündel zu umfassen, wobei eine Länge der Mikrofibrille mehr als 1 Mikrometer beträgt und der zahlendurchschnittliche Durchmesser weniger als 200 nm beträgt.

4. Verfahren nach Anspruch 3, wobei die Futterzusammensetzung zum Füttern von Pelztieren, Nerzen, Wassertieren, Meerestieren, Fischen, Haustieren, Nutztieren, bevorzugt Nerzen dient.

## Revendications

1. Une composition alimentaire comprenant un aliment et 10%, 9%, 8%, 7%, 6%, 5%, 4%, 3%, 2%, 1%, 0,75% ou 0,5% en poids de solides de cellulose parenchymateuse fibrillée, la cellulose parenchymateuse fibrillée étant obtenue à partir de coques de soja, de coques de pois, d'enveloppes de maïs, de bagasse, de maïs, de légumes, de riz, de betterave à sucre, de pulpe de pomme de terre, de fruits ou de mélanges de ceux-ci ;
la composition alimentaire se présentant sous la forme de fourrage, d'aliment comprimé, d'aliment en granulés, d'aliment composé, de granulés, de miettes, de pré-mélange, de tourteau, d'aliment liquide, d'aliment sec ou d'aliment demi-sec ;
la teneur en eau de la composition d'alimentation étant comprise entre 5% et 80% en poids de la composition d'alimentation ;
l'aliment comprenant des abats, des abats de poisson, un concentré de protéines, de la graisse et de l'eau ;
l'aliment ne contenant pas de céréales ; et
la cellulose parenchymateuse fibrillée étant fibrillée de façon à comprendre des micro-fibrilles ou des faisceaux de micro-fibrilles, une longueur d'une micro-fibrille étant supérieure à 1 micromètre et le diamètre moyen en nombre étant inférieur à 200 nm.

2. La composition alimentaire selon la revendication 1, dans laquelle la composition alimentaire est un aliment pour animaux à fourrure.

3. Un procédé de fabrication d'une composition d'alimentation selon la revendication 1 comprenant i) le fait de prévoir un aliment ; ii) le fait de mettre en suspension de la cellulose parenchymateuse fibrillée obtenue à partir de coques de soja, de coques de pois, d'enveloppes de maïs, de bagasse, de maïs, de légumes, de riz, de betterave à sucre, de pulpe de pomme de terre, de fruits ou de mélanges de ceux-ci dans de l'eau ; et iii) le fait de mélanger i) et ii) de telle sorte que la composition d'alimentation comprenne 10%, 9%, 8%, 7%, 6%, 5%, 4%, 3%, 2%, 1%, 0,75% ou 0,5% en poids de matières solides cellulosiques parenchymateuses fibrillées, et que la teneur en eau de la composition alimentaire soit comprise entre 5% et 80% en poids de la composition alimentaire,
l'aliment comprenant des abats, des abats de poisson, un concentré de protéines, de la graisse et de l'eau,
l'aliment ne contenant pas de céréales, et
la cellulose parenchymateuse fibrillée étant fibrillée de façon à comprendre des micro-fibrilles ou des faisceaux de micro-fibrilles, une longueur d'une micro-fibrille étant supérieure à 1 micromètre et le diamètre moyen en nombre étant inférieur à 200 nm.

4. Le procédé selon la revendication 3, dans lequel la composition alimentaire est destinée à nourrir des animaux à fourrure, des visons, des animaux aquatiques, des animaux marins, des poissons, des animaux de compagnie, des animaux de compagnie, de préférence des visons.
